# EUROPEAN PATENT APPLICATION

(11) **EP 2 597 759 A1**
(43) Date of publication of application: **29.05.2013**
(21) Application number: 11190653.3
(22) Date of filing: 24.11.2011
(51) Int. Cl.: H02K 7/09, H02K 7/18

(54) **Wind turbine**

(71) Applicant: 4 Power, 9150 Kruibeke (BE)
(72) Inventor: Senelle, Marc, 9150 Kruibeke (BE); Vanoverbeke, Koen, 9150 Kruibeke (BE)
(74) Representative: Duyver, Jurgen Martha Herman

(57) **Abstract**

Wind turbine (10), comprising a rotor (16) rotatably mounted over an axis of rotation within a stator (15) circumventing the rotor (16) along circumference of the rotor (16), the rotor (16) comprising a plurality of turbine blades (19) rotating the rotor (16) with respect to the stator (15) around the axis of rotation when the axis of rotation is positioned along wind direction and a plurality of pairs of alternatively poled magnets (29) circumventing the rotor (16) along the circumference of the rotor (16) such that upon rotation of the rotor (16), the magnets (29) produce an alternating magnetic field along the stator (15), the stator (15) comprising a conductor (30) organized with respect to the rotor (15) such that when the rotor (15) rotates with respect to the stator (16), the alternating magnetic field generates an electric current through the conductor (30), **characterized in that** the stator (16) comprises a ferromagnetic element (20) arranged such that the magnetic force between the pairs of alternatively poled magnets (29) circumventing the rotor (16) and the ferromagnetic element (20) is configured such that it counteracts the gravitational pull on the rotor (16) such that the weight of the rotor (16) is reduced.

## Description

The current invention relates to a wind turbine according to the preamble of the first claim.

Such wind turbines are already known to the person skilled in the art. W02006/065248A2 for example describes a wind turbine with a rotor rotatably mounted over an axis of rotation within a stator circumventing the rotor along circumference of the rotor. The rotor comprises a plurality of turbine blades rotating the rotor with respect to the stator around the axis of rotation when the axis of rotation is positioned along wind direction. A bearing circumvents the rotor along the circumference of the rotor and rotationally supports the rotor within the stator. A plurality of pairs of alternatively poled magnets circumvents the rotor along the circumference of the rotor such that upon rotation of the rotor, the magnets produce an alternating magnetic field along the stator. The stator comprises a conductor organized with respect to the rotor such that when the rotor rotates with respect to the stator, the alternating magnetic field generates an electric current through the conductor.

However, the friction between the elements of the bearing, for example the races of the mechanical bearing according to W02006/065248A2, significantly reduces the performance of the wind turbine. Although other types of bearings significantly reduce friction, they have been found difficult, costly to install and/or to operate.

Therefore, it is an object of the current invention to provide a wind turbine in which rotational friction is reduced.

This is achieved according to the wind turbine according to the characterizing part of the first claim.

Thereto, the stator comprises a ferromagnetic element arranged such that the magnetic force between the pairs of alternatively poled magnets circumventing the rotor and the element is configured such that it counteracts the gravitational pull on the rotor such that the weight of the rotor is reduced, preferably substantially reduced.

It has been found that such a configuration allows reducing the weight of the rotor reducing rotational friction of the rotor, which depends on the weight of the rotor transferred to the stator, when rotating around the axis of rotation.

Although magnetic levitation of rotors of wind turbines is for example already described in US2010213723, it relates to wind turbines in which the rotor is magnetically levitated with respect to the stator to reduce friction. However, in such system the magnetic field levitating the rotor is not induced by the magnets generating the changing magnetic field and the electric current in the conductor. Therefore, at least additional magnets are needed for levitating the rotor. Moreover, in such systems the stator does not circumvent the rotor and the axis of rotation is not located along wind direction for driving rotation of the rotor.

According to preferred embodiments of the current invention, a bearing circumvents the rotor along the circumference of the rotor and rotationally supports the rotor within the stator. The effect of the reduction of the friction is larger in such wind turbines as such a wind turbine comprising such a bearing has been found to be especially susceptible to friction caused by the weight of the rotor in the stator. Indeed, the frictional forces counteract the rotation of the rotor operate at a distance from the axis of rotation, resulting in a larger moment than compared to a bearing which is provided closer to the axis of rotation, for example when the rotor is supported by a bearing near the axis of rotation and thus not circumventing the rotor but substantially lying inside the circumference of the rotor.

According to preferred embodiments of the current invention, the magnetic force counteracting the gravitational pull is 90% - 110% of the gravitational pull of the rotor as in such embodiments it has been found that the weight of the rotor, and therefore also the rotational friction is substantially reduced. Although optimal results are obtained with such a configuration, good results can also be obtained with embodiments in which the magnetic force counteracting the gravitational pull is 50% - 150% of the gravitational pull of the rotor, more preferably 70% - 130% even more preferably 80% - 120%.

According to preferred embodiments of the current invention, the element is provided, preferably near the top of the rotor, such as to create a magnetic force originating at the circumference of the rotor near the top of the rotor, at the location of the magnets adjacent to the element. It has been found that the magnetic force in such a way can be provided relatively easily.

The invention will be further elucidated by means of the following description and the appended figures.
Fig. 1 is a perspective view of a pole-mounted wind turbine assembly according to the invention;
Fig. 2 is a front view of a blade and rotor-drum assembly;
Fig. 3 is a sectional side elevation of the turbine assembly;
Fig. 4 is an exploded perspective view of the turbine assembly shown in FIG. 3;
Fig. 5 is a perspective view of an embodiment using inlet guide vanes; and
Fig. 6 shows a frontal cross-section of another wind turbine according to the invention.

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

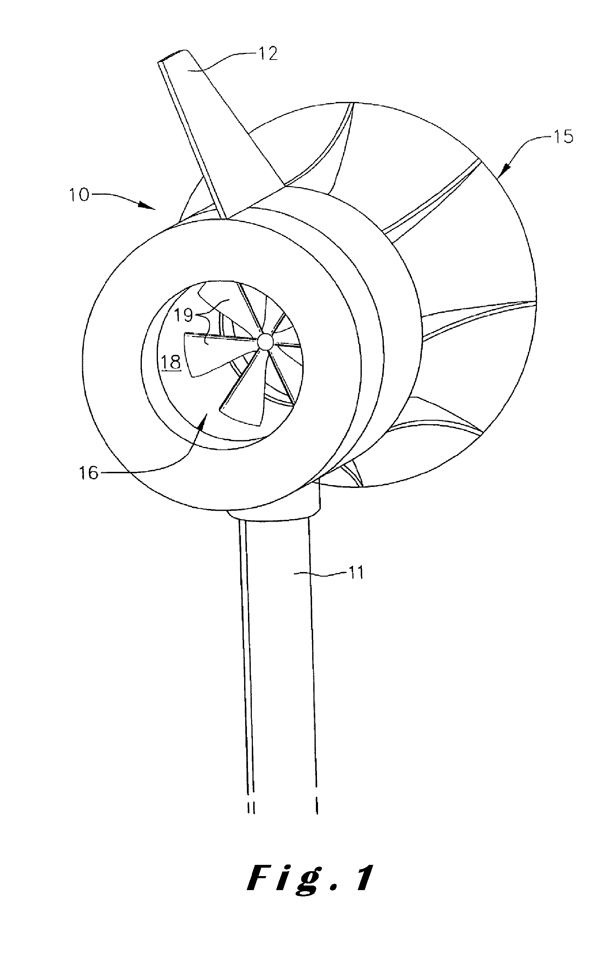

Figure 1 shows a wind turbine assembly 10 according to the invention. The wind turbine 10 is rotatably mounted on a conventional support pole 11 so it can be moved by a fin 12 to compensate for shifting wind directions. However, the fin 12 is not critical for the invention and can be omitted, for example on locations where the wind come from substantially the same direction or where other means for moving the wind turbine 10 to compensate for shifting wind directions are employed, such as for example a motor, for example an electrical motor.

Additionally, the support pole 11 is also not critical for the invention and can be replaced by other types of pole 11 or can even be omitted in some applications.

The rotor 16 is rotatably mounted over an axis of rotation within a stator 15. The stator 15 circumvents the rotor 16 along circumference of the rotor 16, the rotor 16 comprising a plurality of turbine blades 19 rotating the rotor 16 with respect to the stator 15 around the axis of rotation when the axis of rotation is positioned along wind direction and a plurality of pairs of alternatively poled magnets 29 circumventing the rotor 16 along the circumference of the rotor 16 such that upon rotation of the rotor 16, the magnets 29 produce an alternating magnetic field along the stator 15, the stator comprising a conductor 30 organized such with respect to the rotor 16 that when the rotor 16 rotates with respect to the stator 15, the alternating magnetic field generates an electric current through the conductor 30.

A bearing 26 circumvents the rotor 16 along the circumference of the rotor 16 and rotationally supporting the rotor 16 within the stator 15. This is however not critical for the invention and the rotor may also be rotationally supported at the axis of rotation.

As shown in figure 1, the stator 15 preferably comprises an outer diffuser shell, within which can be seen the rotor 16 comprising a blade and rotor-drum assembly as described in greater detail below. The diffuser shell allows for more wind to be collected by the wind turbine 10, increasing the efficiency of the wind turbine. The diffuser shell is however not critical for the invention and can be omitted.

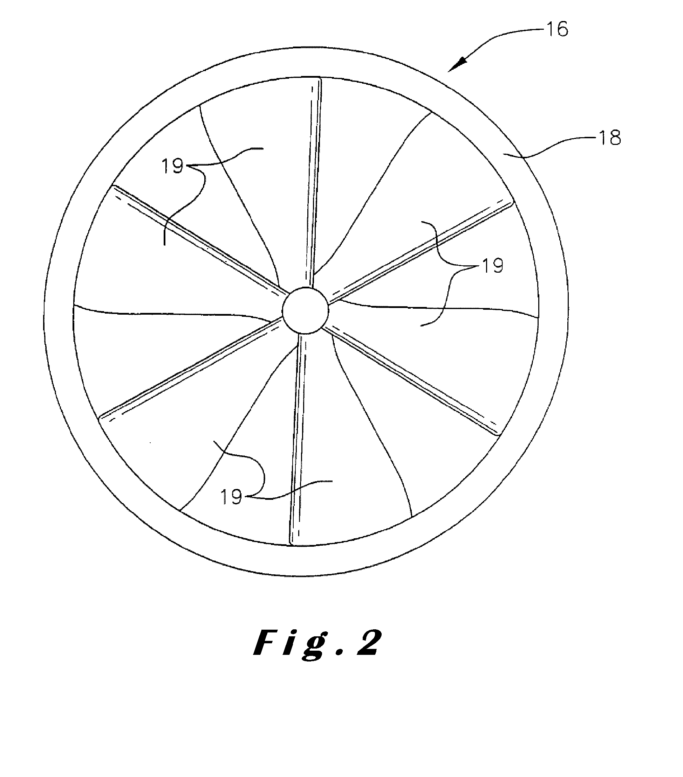

Figure 2 shows the rotor 16 in greater detail, and as having an outer cylindrical rotor drum 18, with the turbine blades 19 extending radially therein, and preferably integrally formed with the rotor drum. Such a construction is however not critical for the invention and other embodiments are possible.

The rotor 16 can be cast or of welded construction if made of metal (e.g., aluminum), or integrally injected molded if made from a composite material strengthened by glass, carbon, or similar reinforcing fibers. Though six blades are shown, the number of blades can be selected by the designer. Multiple blades, such as five or six, are preferred as they improve turbine efficiency, as well as increasing the rigidity of rotor 16.

Turbine-blade strength and stiffness is significantly increased by the fixed support of the blades on the drum. The assembly is stable and balanced, and can be safely operated at high wind speeds encountered in storm conditions. For smaller wind turbine assemblies which typically operate at high rotation speeds, centrifugal force compressively loads the blades, making them less prone to fatigue failure.

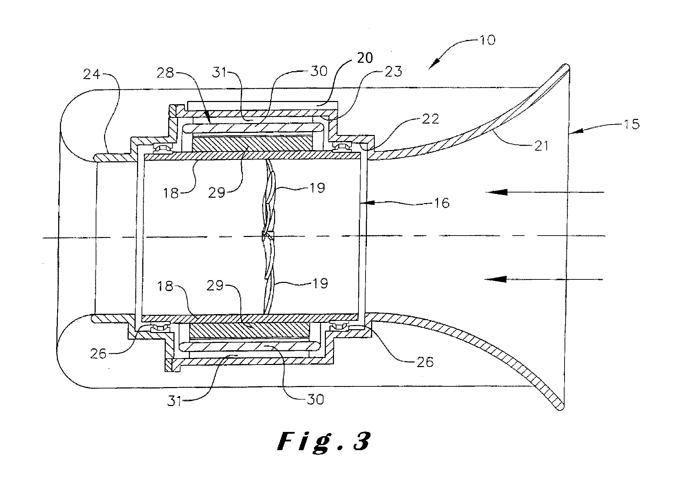

Figure 3 is a sectional side elevation of one embodiment of the wind turbine 10, and shows rotor 16 as rotatably mounted within the diffuser shell around the axis of rotation. The stator 15 is preferably molded from a strong composite material, and preferably has an outwardly divergent section 21, forming the diffuser shell which preferably merges with outwardly stepped ring-shaped inner and outer cylindrical support sections 22 and 23. An end portion 24 of the diffuser shell is separately formed, and is rigidly secured to a more forward part of the diffuser shell after the blade and rotor drum is fitted therein. The outlet end of the diffuser shell may be made more divergent to optimize aerodynamic conditions.

Figure 3 shows that the bearing 26 comprises a pair of spaced-apart ring-shaped bearings having outer races secured to the inner surface of support section 22, and inner races secured to the outer surface of the rotor drum, thereby rotatably mounting rotor 16 within the stator 15. The absence of any clearance between the blade tips and the rotor drum (which forms a cylindrical part of the diffuser) is another feature eliminating tip losses, and producing high turbine efficiency. Such bearing 26 is however not critical for the invention and also other means can be used. For example the bearing 26 can comprise a magnetic bearing for lower friction at high rotational speeds, a ball bearing, etc. Although the bearing can comprise elements substantially circumventing the rotor along circumference of the rotor, such as for example the bearing shown in figure 3, this is not critical for the invention and the bearing can also comprise a number of distinct elements, such as for example, three, four, five or even more elements rotationally bearing the weight of the rotor 16 in the stator 15. The bearing 26 can also comprise a fluid bearing, for example a bearing 26 using an air flow, for example caused by the rotation of the rotor 16 in the stator 15.

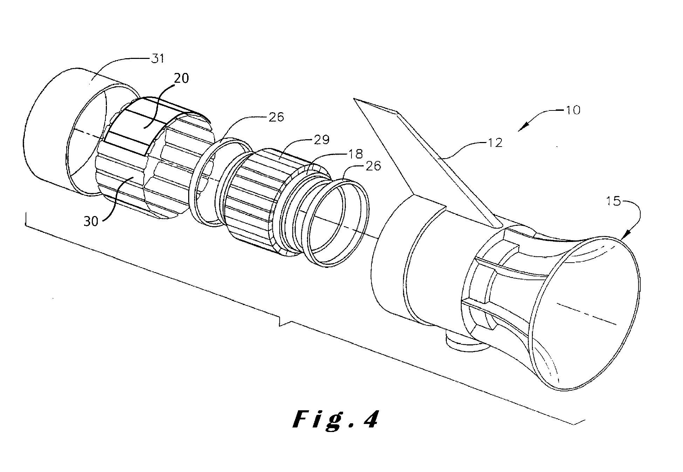

The embodiment shown in Figure 3, and the exploded view of Figure 4, show the magnets 29 and the conductor 30 delivering electric current to an electrical generator assembly 28 cylindrically around the rotor 16. Preferably the magnets 29 are in the form of a cylindrical assembly 29 of magnets, preferably permanent magnets although electromagnets can also be used, secured to the outer surface of the rotor 16 to rotate therewith.

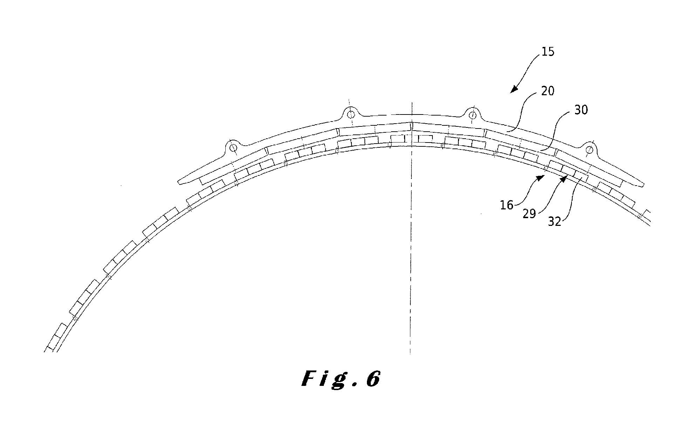

Figure 4 shows that the magnets 29 are applied to the rotor 16 as a substantially continuous ring of closely spaced magnets 29. Figure 6 for example shows a detail of such a configuration wherein the alternately poled magnets 29 comprise groups of submagnets 32, for example three, but possibly two, four, five six or more. The submagnets 32 allow that the magnets 29 can be made up using substantially beam-shaped submagnets 32, which are readily available, with the magnets 29 extending along the circumference of the rotor 16 along circumferential direction of the rotor 16 while nevertheless keeping the distance between the circumference of the rotor and the magnets 29 relatively small.

Slightly outwardly spaced from the magnet assembly is a conductor 30, preferably comprising an electrical conducting wire wound to at least one coil, the coil axis preferably being positioned substantially perpendicular to the circumference of the rotor 16. Preferably, as shown in figure 3, several coils are provided, more preferably in the form of a cylindrical assembly 30 of coils preferably secured to a support ring 31, which is in turn rigidly secured to the inner surface of support section 23 of the stator 15.

Although, as shown in figure 4, conductors 30 are applied along the entire circumference of the rotor 16, this is not critical for the invention and conductors 30, preferably in the form of coils, can be applied at distinct locations along the circumference of the rotor 16, for example 3, 4, 5, 6, 7, 8, 9 locations. Preferably, although not critically, these locations are central-symmetrically arranged with respect to the axis of rotation.

Preferably, the conductor 30 is positioned at the location of the ferromagnetic element 20 as it has been found that the ferromagnetic element 20 allows to attract magnetic field lines such that, when the conductor 30 is positioned in between the ferromagnetic element 20 and the magnets 29 of the rotor, the magnetic field lines of the magnets 29 are concentrated through, for example, the coils of the conductor increasing the electric current caused by the magnets 29 in the conductor 30.

Preferably, the rotor 16 comprises a ferromagnetic layer on which the alternately poled magnets 29 are positioned such that the magnetic field lines are further concentrated between the magnets 29 to further improve the efficiency with which the electric current is caused by the magnets 29 in the conductor 30.

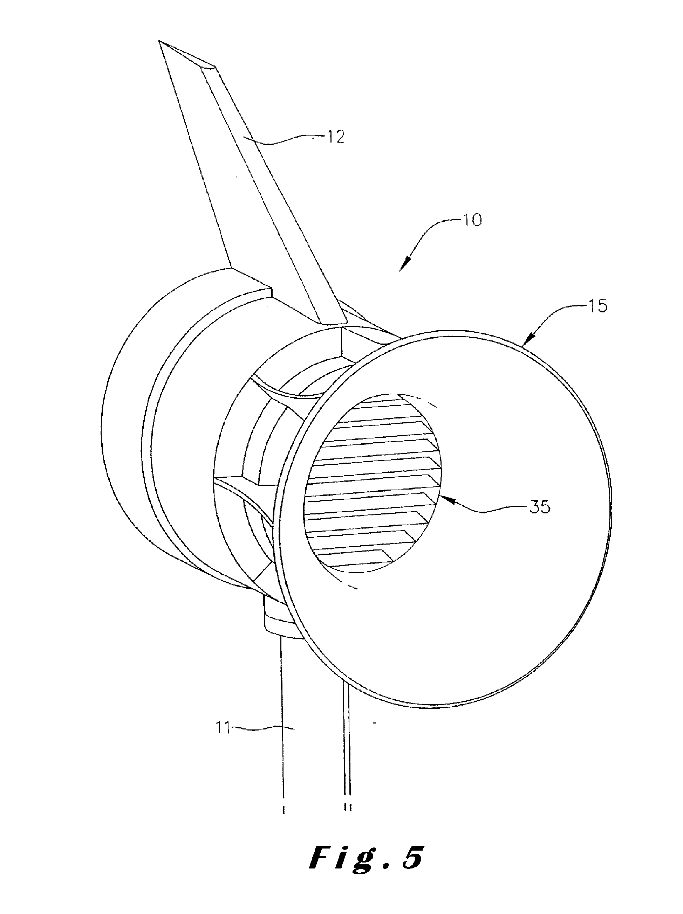

Figure 5 shows another embodiment using an assembly 35 of stator vanes or inlet guide vanes secured within the inner end of the stator 15 preferably, of outwardly divergent section 21 of the diffuser shell. The use of such vanes is a known technique enabling use of fixed-pitch turbine blades, but with the advantages of more complex variable-pitch blades. The diffuser shell can also be lined with a sound-absorbing material for noise reduction during turbine operation.

Figure 3 shows that the stator 15 comprises a ferromagnetic element 20 arranged such that the magnetic force between the pairs of alternatively poled magnets circumventing the rotor 16 and the element is configured such that it counteracts the gravitational pull on the rotor such that the weight of the rotor is reduced. The ferromagnetic element 20, is further shown in the cross-section of figure 6.

The ferromagnetic element 20 can be made of any ferromagnetic material known to the person skilled in the art such as for example: cobalt (Co), Iron (Fe), etc.

As can be seen in figure 6, the ferromagnetic element 20 preferably extends along part of the magnets along the circumference of the rotor 16. For example the ferromagnetic element 20 can extend over the upper 180° of the stator 15. This is however not critical for the invention and the ferromagnetic element 20 can also extend over for example 10°, 20°, 30°, 40°, 50°, 60°, 70°, 80°, 90°, etc. of the circumference of the stator 15.

Although the wind turbine 10 shown in figure 6 comprises a single ferromagnetic element 20, this is not critical for the invention and the wind turbine 20 can also comprise several ferromagnetic elements 20.

The at least one ferromagnetic element 20 is positioned symmetrically with respect to the top of the rotor 16. For example, in case a single or an uneven ferromagnetic element 20 is being applied, at least one of the ferromagnetic elements being applied symmetrically over the top of the wind turbine 10, as shown in figure 6, or, in case an even number of ferromagnetic elements 20 is applied, two symmetric groups of ferromagnetic elements 20 located symmetrically with respect to the top of the wind turbine 10. Such a symmetric positioning of the element 20, which are preferably substantially identical, with respect to the top of the rotor 16 allows suspending the rotor 16 within the stator 15 with an increased stability. Moreover, when a plurality of such elements 20 are being used in the wind turbine 10 in addition to counteracting the gravitational pull on the rotor 16, horizontal forces within the plane of the rotor 16 are being counteracted, further decreasing friction.

Preferably, the ferromagnetic element 20 is provided, more preferably near the top of the rotor 16, such as to create a magnetic force originating at the circumference of the rotor 16 near the top of the rotor 16, at the location of the magnets 29 adjacent to the ferromagnetic element 20, as shown in figure 6.

Figure 6 shows that the ferromagnetic element 20 is attached to the stator 15 using openings applied in it, through which attachment means such as for example bolts, nails, etc. can be applied.

Although not shown in the figures, means can be provided to change the distance between the ferromagnetic element 20 and the magnets 29 of the rotor 16, for example means for moving the ferromagnetic element 20 away from and to the magnets 29. It has been found that such means allow to change the magnetic force counteracting the gravitational pull on the rotor 16.

Other applications on the wind turbine assembly include "reverse" operation as a wind-generating fan, by applying electrical energy to the generator which then acts as a motor to rotate the blades. Another application involves adding blades to the outside of the rotor drum which is appropriately sealed to act as a wind-driven water pump, air compressor, or fan.

## Claims

1. Wind turbine (10), comprising a rotor (16) rotatably mounted over an axis of rotation within a stator (15) circumventing the rotor (16) along circumference of the rotor (16), the rotor (16) comprising a plurality of turbine blades (19) rotating the rotor (16) with respect to the stator (15) around the axis of rotation when the axis of rotation is positioned along wind direction and a plurality of pairs of alternatively poled magnets (29) circumventing the rotor (16) along the circumference of the rotor (16) such that upon rotation of the rotor (16), the magnets (29) produce an alternating magnetic field along the stator (15), the stator (15) comprising a conductor (30) organized with respect to the rotor (15) such that when the rotor (15) rotates with respect to the stator (16), the alternating magnetic field generates an electric current through the conductor (30), **characterized in that** the stator (16) comprises a ferromagnetic element (20) arranged such that the magnetic force between the pairs of alternatively poled magnets (29) circumventing the rotor (16) and the ferromagnetic element (20) is configured such that it counteracts the gravitational pull on the rotor (16) such that the weight of the rotor (16) is reduced.

2. Wind turbine according to claim 1, **characterized in that** a bearing (26) circumvents the rotor (16) along the circumference of the rotor (16) and rotationally supports the rotor (6) within the stator (15).

3. Wind turbine (10) according to claim 1 or 2, **characterized in that** the magnetic force counteracting the gravitational pull is 90% - 110% of the gravitational pull of the rotor (16).

4. Wind turbine (10) according to any one of claims 1 - 3, **characterized in that** the ferromagnetic element (20) is provided such as to create a resulting magnetic force originating at the circumference of the rotor (16) near the top of the rotor (16), at the location of the magnets (29) adjacent to the ferromagnetic element (20).

5. Wind turbine (10) according to claim 4, **characterized in that** the ferromagnetic element (20) provided is near the top of the rotor (16).

6. Wind turbine (10) according to any one of claims 1 - 5, **characterized in that** the conductor (30) comprises an electrical conducting wire wound to a coil, the coil axis being positioned substantially perpendicular to the circumference of the rotor (16).

7. Wind turbine (10) according to any one of claims 1 - 6, **characterized in that** means are provided to change the distance between the ferromagnetic element (20) and the magnets (29) of the rotor (16).

8. Wind turbine (10) according to claim 7, **characterized in that** the means are configured for moving the ferromagnetic element (20) away from and to the magnets (29).

9. Wind turbine (10) according to any one of claims 1 - 8, **characterized in that**, the conductor (30) is positioned at the location of the element with the conductor (30) being positioned in between the ferromagnetic element (20) and the magnets (29) of the rotor.

10. Wind turbine (10) according to any one of claims 1 - 9, **characterized in that**, the rotor (16) comprises a ferromagnetic layer on which the alternately poled magnets (29) are positioned.
